# EUROPÄISCHE PATENTANMELDUNG

(11) **EP 4 497 944 A1**
(43) Veröffentlichungstag der Anmeldung: **29.01.2025**
(21) Anmeldenummer: 24180222.2
(22) Anmeldetag: 05.06.2024
(51) Int. Cl.: F03D 13/10, F03D 13/20

(54) **TURMSEGMENT FÜR EINEN TURM EINER WINDENERGIEANLAGE SOWIE BETREFFENDER TURM**

(30) Priorität: 27.07.2023 DE 102023120009
(71) Anmelder: Bettels Betonfertigteile GmbH, 26723 Emden (DE)
(72) Erfinder: Stracke, Olaf, 26725 Emden (DE); Meesenburg, Lorenz, 28203 Bremen (DE)
(74) Vertreter: Eisenführ Speiser

(57) **Zusammenfassung**

Die Erfindung betrifft ein Turmsegment (6) für einen Turm (4) einer Windenergieanlage (2), mit wenigstens drei übereinander angeordneten Wandelementen (8), wobei die Wandelemente (8) aus einem Betonwerkstoff ausgebildet sind.

Erfindungsgemäß wird vorgeschlagen, dass ein mittleres Wandelement (10) der drei Wandelemente (8) als konisches Wandelement (10) ausgebildet ist, welches einen in Richtung einer Turmlängsachse (14) verlaufenden konischen Abschnitt (22) aufweist oder vollständig konisch ausgebildet ist, und wobei die unterhalb und oberhalb an das konische Wandelement (10) unmittelbar angrenzenden Wandelemente (12) als zylindrische Wandelemente (12) ausgebildet sind, welche in Richtung der Turmlängsachse (14) einen zylindrischen Verlauf aufweisen.

## Beschreibung

Die Erfindung betrifft ein Turmsegment für einen Turm einer Windenergieanlage mit wenigstens drei übereinander angeordneten Wandelementen, wobei die Wandelemente aus einem Betonwerkstoff ausgebildet sind. Die Erfindung betrifft ferner einen Turm sowie eine Windenergieanlage.

Derartige Turmsegmente, welche zum Aufbau eines Turms einer Windenergieanlage verwendet werden, sind aus dem Stand der Technik bekannt. Bei Betontürmen hat es sich u.a. aus statischen Gründen bewährt, den Durchmesser der Turmsegmente mit zunehmender Höhe zu reduzieren. Diese Höhenreduzierung erfolgt über mehrere Wandelemente, die beispielswiese jeweils konisch ausgebildet sein können. Eine derartige Turmgeometrie hat zur Folge, dass die für die Durchmesserreduktion vorgesehenen Wandelemente jeweils unterschiedliche Wandelement-Geometrien aufweisen. Die Wandelemente sind in individuellen Formen zu fertigen und entsprechend aufwendig auszulegen und zu konstruieren. Der Fertigungs- und Konstruktionsaufwand ist somit mitunter hoch. Darüber hinaus hat die Durchmesserreduktion über mehrere Wandelemente mit entsprechender Bauhöhe zur Folge, dass die Flexibilität bei der Höhengestaltung des Turmes eingeschränkt ist und auch besonderen Anforderungen und Kundenwünschen nur begrenzt nachgekommen werden kann. Darüber hinaus hat sich gezeigt, dass auch der Transport derartiger individuell angefertigter Wandelemente aufwendig sein kann, da die konischen Wandelemente unterschiedliche Außengeometrien aufweisen, wobei beim Transport derartiger Wandelemente für jedes dieser Wandelemente unter Umständen eine individuelle Befestigungs- und Verzurrlösung vorgehalten werden muss.

Vor diesem Hintergrund lag der Erfindung die Aufgabe zugrunde, ein Turmsegment für einen Turm einer Windenergieanlage der eingangs bezeichneten Art dahingehend weiterzubilden, dass die im Stand der Technik gefundenen Nachteile möglichst weitgehend behoben werden. Insbesondere war ein Turmsegment anzugeben, welches eine kompaktere Bauweise aufweist, eine flexiblere Höhengestaltung des Turmes erlaubt und insgesamt eine einfachere Anpassung an die Bedingungen des Kunden erlaubt. Darüber hinaus soll die Bauteilkomplexität der zum Aufbau des Turmes bzw. Turmsegmentes verwendeten Wandelemente reduziert werden.

Erfindungsgemäß wird die Aufgabe bei einem Turmsegment der eingangs genannten Art dadurch gelöst, dass ein mittleres Wandelement der wenigstens drei Wandelemente als ein konisches Wandelement ausgebildet ist, welches einen in Richtung einer Turmlängsachse verlaufenden konischen Abschnitt aufweist oder vollständig konisch ausgebildet ist, und wobei die unterhalb und oberhalb an das konische Wandelement unmittelbar angrenzenden Wandelemente als zylindrische Wandelemente ausgebildet sind, welche in Richtung der Turmlängsachse einen zylindrischen Verlauf aufweisen.

Die Erfindung macht sich die Erkenntnis zunutze, dass durch die Kombination eines konischen Wandelementes mit angrenzenden zylindrischen Wandelementen die durch den konischen Abschnitt bewirkte Aufweitung (oder Reduzierung) des Außendurchmessers über eine sehr begrenzte Höhe erfolgt, nämlich lediglich über die Höhe eines einzigen Wandelements. Hierdurch wird die Höhengestaltung eines aus Turmsegmenten zusammengestellten Turmes flexibilisiert und der Turm kann nach Art eines Baukastenprinzips besonders gut an einen gewünschten Einsatzzweck angepasst werden. Darüber hinaus weisen, im Vergleich zu aus dem Stand der Technik vorbekannten Türmen, mehr Bauteile dieselbe Außengeometrie auf. Bspw. können benachbart zu dem konischen Wandelement mehrere zylindrische Wandelemente oberhalb und unterhalb des konischen Wandelements vorgesehen sein, die dieselbe Außengeometrie aufweisen. Auf diese Weise wird auch die Fertigungskomplexität reduziert und der Transport sowie auch die Montage der Wandelemente erleichtert. Insgesamt kann der erfindungsgemäße Turm mit den erfindungsgemäßen Turmsegmenten aus standardisierten Betonfertigteilen aufgebaut werden. Der Turm ist besser staffelbar hinsichtlich seiner Gesamtgeometrie und somit besser anpassbar an die individuellen Bedingungen.

Unter einem konischen Verlauf oder einem konischen Abschnitt wird ein solcher Verlauf bzw. Abschnitt verstanden, bei dem eine Durchmesserreduktion bzw. Aufweitung in Richtung einer Turmlängsachse erfolgt. Vorzugsweise erfolgt die Durchmesserreduktion bzw. Aufweitung im Bereich des konischen Abschnitts linear, insbesondere derart, dass die Durchmesserreduktion bzw. Aufweitung in Richtung der Turmlängsachse gleichmäßig erfolgt. Alternativ kann die Durchmesserreduktion bzw. Aufweitung im Bereich des konischen Abschnitts nichtlinear, insbesondere in Form einer konkaven oder konvexen Wölbung erfolgen. Unter einem zylindrischen Verlauf wird ein solcher Verlauf verstanden, bei dem das Wandelement in Richtung der Turmlängsachse einen im Wesentlichen konstanten Durchmesser aufweist. Insbesondere entspricht ein im montierten Zustand oberseitiger Durchmesser des zylindrischen Wandelements im Wesentlichen einem unterseitigen Durchmesser des Wandelements.

Gemäß einer Ausführungsform verjüngt sich das konische Wandelement im Bereich des konischen Abschnitts mit zunehmender Turmhöhe. Auf diese Weise kann eine Reduzierung des Außendurchmessers eines aus erfindungsgemäßen Turmsegmenten konfektionierten Turmes stufenweise erreicht werden, in dem bspw. mehrere erfindungsgemäße Turmsegmente übereinander angeordnet werden und wobei sich der Durchmesser des Turmes im Bereich der konischen Abschnitte stufenweise verjüngt.

Gemäß einer Ausführungsform entspricht ein Außendurchmesser des unterhalb des konischen Wandelements angeordneten zylindrischen Wandelements einem unteren Konus-Außendurchmesser des konischen Abschnitts und/oder ein Außendurchmesser des oberhalb des konischen Wandelements angeordneten zylindrischen Wandelements einem oberen Konus-Außendurchmesser des konischen Abschnitts. Auf diese Weise wird ein gelichmäßiger Übergang des Außendurchmessers sichergestellt, wobei eine Verjüngung bzw. Aufweitung des Außendurchmessers insbesondere ausschließlich im Bereich des konischen Abschnittes erfolgt. Im Vergleich zu aus dem Stand der Technik vorbekannten Lösungen wird lediglich ein konisches Wandelement verwendet, wobei benachbart zu diesem Wandelement zylindrische Wandelemente angeordnet sind. Unter einer benachbarten Anordnung wird im Rahmen der vorliegenden Erfindung verstanden, dass die zylindrischen Wandelemente oberhalb und/oder unterhalb unmittelbar an das zylindrische Wandelement angrenzen, d.h. keine weiteren Wandelemente hierzwischen vorgesehen sind.

Gemäß einer Ausführungsform weist das konische Wandelement unterhalb des konischen Abschnitts wenigstens einen oberen zylindrischen Abschnitt mit einem Durchmesser auf, welcher dem unteren Konus- Außendurchmesser entspricht. Gemäß einer Ausführungsform weist das konische Wandelement oberhalb des konischen Abschnitts wenigstens einen zylindrischen Abschnitt mit einem Durchmesser auf, welcher dem oberen Konus- Außendurchmesser entspricht. Mit anderen Worten weist ein derartig konfiguriertes konisches Wandelement drei Abschnitte auf, nämlich einen oberen zylindrischen Abschnitt, einen mittleren konischen Abschnitt und einen unteren zylindrischen Abschnitt. Vorzugsweise erstreckt sich der konische Abschnitt über 50% bis 80% der Gesamthöhe des konischen Wandelements. Gemäß einer Ausführungsform weisen der untere zylindrische Abschnitt und der obere zylindrische Abschnitt die gleiche Höhe auf.

Gemäß einer Ausführungsform entspricht die Höhe des konischen Wandelements im Wesentlichen der Höhe eines angrenzenden zylindrischen Wandelements. Gemäß einer Ausführungsform weisen sämtliche Wandelemente im Wesentlichen dieselbe Höhe auf. Auf diese Weise wird die Konfiguration und Konfektion eines aus den erfindungsgemäßen Turmsegmenten zusammengesetzten Turms weiter vereinfacht. Darüber hinaus wird auch der Transport der Wandelemente durch die konstante Höhe vereinfacht.

Gemäß einer Ausführungsform weist das Turmsegment zwei konische Wandelemente auf und wobei zwischen zwei in Richtung der Längsachse benachbarten konischen Wandelementen zwei oder mehr zylindrische Wandelemente angeordnet sind. Unter zwei benachbarten konischen Wandelementen werden solche Wandelemente verstanden, bei denen zwischen den beiden konischen Wandelementen keine weiteren, insbesondere konischen, Wandelemente angeordnet sind, die den Außendurchmesser der Wandelemente verjüngen oder erweitern. Durch die Anordnung von zwei oder mehr zylindrischen Wandelementen, welche einen konstanten Durchmesser und insgesamt die gleiche Bauteilgeometrie aufweisen, wird die Fertigungskomplexität des Turmsegmentes reduziert und der Transport der Turmsegmente vereinfacht. Darüber hinaus kann der Turm besonders vorteilhaft wie gewünscht konfiguriert werden.

Gemäß einer Ausführungsform verjüngt sich ein Außendurchmesser des konischen Wandelements von dem oberen Konus-Außendurchmesser bis zu dem unteren Konus-Außendurchmesser um 800 mm bis 1200 mm, insbesondere um 1000 mm. Der beanspruchte Verjüngungsbereich hat sich als besonders geeignet erwiesen, um einerseits eine signifikante Durchmesserreduktion zu erreichen und andererseits den statischen Anforderungen an einen betreffenden Turm bzw. an ein betreffendes Turmsegment Genüge zu tun.

Gemäß einer Ausführungsform weist das konische Wandelement eine Höhe in Richtung der Turmlängsachse von 2000 mm bis 4000 mm auf, insbesondere von 2600 mm bis 3000 mm. Gemäß einer Ausführungsform weist wenigstens eines oder weisen insbesondere sämtliche der zylindrischen Wandelemente eine Höhe in Richtung der Turmlängsachse von 2000 mm bis 4000 mm auf, insbesondere 2600 mm bis 3000 mm. Gemäß einer Ausführungsform weisen sowohl die konischen Wandelemente als auch die zylindrischen Wandelemente eine Höhe von 2800 mm auf. Hierdurch wird die Konstruktions- und Bauteilkomplexität reduziert. Der Turm kann deutlich besser an die Bedingungen des Kunden angepasst werden und es wird darüber hinaus erreicht, dass eine flexible Höhengestaltung des Turms verwirklicht werden kann.

Gemäß einer Ausführungsform ist der Betonwerkstoff ein hochfester Betonwerkstoff, insbesondere ein Betonwerkstoff der Druckfestigkeitsklasse C90/105 oder C100/115. Die genannten Werkstoffe haben sich als besonders geeignet zum Aufbau eines betreffenden Turmes erwiesen.

Gemäß einer Ausführungsform weist wenigstens eine oder weisen mehrere oder alle der Wandelemente zwei, drei oder mehr Halbschalen auf bzw. sind aus zwei, drei oder mehr Halbschalen ausgebildet. Auf diese Weise können die Wandelemente einfacher transportiert werden, da die Masse der einzelnen Halbschalen geringer ist als die Gesamtmasse eines entsprechenden Wandelements. Darüber hinaus können die Halbschalen, die bspw. für die zylindrischen Wandelemente vorgesehen sind, standardisiert und in höherer Stückzahl gefertigt werden, wodurch die Fertigungskosten reduziert werden können. Gemäß einer Ausführungsform weisen die zylindrischen Wandelemente drei Halbschalen auf. Gemäß einer Ausführungsform weisen die konischen Abschnitte 3 bis 6 Halbschalen auf, wobei vorzugsweise die Anzahl der Halbschalen der konischen Wandelemente mit zunehmender Turmhöhe abnimmt.

Gemäß einer Ausführungsform weisen die Halbschalen Verbindungsmittel zur Verbindung der Halbschalen miteinander auf. Auf diese Weise kann aus den mehreren Halbschalen ein Wandelement zusammengestellt werden. Gemäß einer Ausführungsform weisen die Halbschalen wenigstens eine Aufnahme zur Aufnahme eines Hebemittels auf. Hierdurch wird der Aufbau des Turmes erleichtert. Die Halbschalen bzw. aus den Halbschalen zusammengesetzte Wandelemente können mittels eines Kranes angehoben und zu einem Turmsegment oder Turm zusammengesetzt werden.

Gemäß einer Ausführungsform weisen die Wandelemente einen Außendurchmesser von 4000 mm bis 13000 mm auf. Gemäß einer Ausführungsform weisen die Wandelemente eine Wandstärke von 300 mm bis 500 mm auf. Insbesondere beträgt die Wandstärke der Wandelemente 350 mm. Die genannten Dimensionen haben sich für den geplanten Einsatzzweck als besonders geeignet erwiesen.

Die Erfindung ist vorstehend unter Bezugnahme auf ein Turmsegment beschrieben worden. In einem weiteren Aspekt betrifft die Erfindung einen Turm für eine Windenergieanlage. Die Erfindung löst die eingangs bezeichnete Aufgabe in Bezug auf den Turm, indem dieser wenigstens eines oder mehrere Turmsegmente nach einem der vorstehenden Ausführungsbeispiele aufweist. Bspw. kann ein Turm insgesamt vier Turmsegmente aufweisen, die jeweils ein konisches Segment aufweisen. Insoweit erfolgt in einem solchen Fall die Durchmesserreduktion des Turmes mit zunehmender Höhe lediglich mittels vier konischer Wandelemente. Gemäß einer Ausführungsform bilden sämtliche Wandelemente, d.h. konische Wandelemente und zylindrische Wandelemente ein Betonsegment aus, welches sich ausgehend von einem Bodensegment des Turmes erstreckt. Oberhalb des Betonsegments ist vorzugsweise ein Stahlsegment angeordnet, welches Elemente aus Stahl aufweist. Gemäß einer bevorzugten Ausführungsform ist der Betonwerkstoff jener Wandelemente, die benachbart zu dem Stahlsegment angeordnet sind, ein Betonwerkstoff der Druckfestigkeitsklasse C100/115. Gemäß einer bevorzugten Ausführungsform weist das obere konische Wandelement und die zwischen dem oberen konischen Wandelement und dem Stahlsegment angeordneten zylindrischen Wandelemente einen Betonwerkstoff der Druckfestigkeitsklasse C100/115 auf.

Der Turm macht sich im Übrigen die gleichen Vorteile und bevorzugten Ausführungsformen zunutze wie das erfindungsgemäße Turmsegment und umgekehrt. Diesbezüglich wird auf die obigen Ausführungen verwiesen und deren Inhalt hiermit einbezogen.

In einem weiteren Aspekt betrifft die Erfindung eine Windenergieanlage mit einem Turm. Die Erfindung löst die eingangs bezeichnete Aufgabe in Bezug auf die Windenergieanlage, indem der Turm nach dem vorstehenden Ausführungsbeispiel ausgebildet ist. Die Windenergieanlage macht sich die gleichen Vorteile und bevorzugten Ausführungsformen zunutze wie das erfindungsgemäße Turmsegment, der erfindungsgemäße Turm und umgekehrt. Diesbezüglich wird auf die obigen Ausführungen verwiesen und deren Inhalt hiermit einbezogen.

In einem weiteren Aspekt betrifft die Erfindung die Verwendung eines Turmsegments nach einem der vorstehenden Ausführungsbeispiele für einen Turm einer Windenergieanlage. Auch die Verwendung macht sich die gleichen Vorteile und bevorzugten Ausführungsformen zunutze wie das erfindungsgemäße Turmsegment und der erfindungsgemäße Turm sowie umgekehrt. Diesbezüglich wird auf die obigen Ausführungen verwiesen und deren Inhalt hiermit einbezogen.

Die Erfindung wird nachfolgend anhand eines bevorzugten Ausführungsbeispiels unter Bezugnahme auf die beigefügten Figuren näher beschrieben.

Hierbei zeigen:
- Fig. 1: einen erfindungsgemäßen Turm für eine Windenergieanlage in einer Seitenansicht;
- Fig. 2 und 3: Detailansichten des erfindungsgemäßen Turms gemäß Figur 1 in Seitenansichten;
- Fig. 4: eine Halbschale eines Wandelements eines erfindungsgemäßen Turms gemäß den Figuren 1 bis 3 in einer perspektivischen Ansicht.

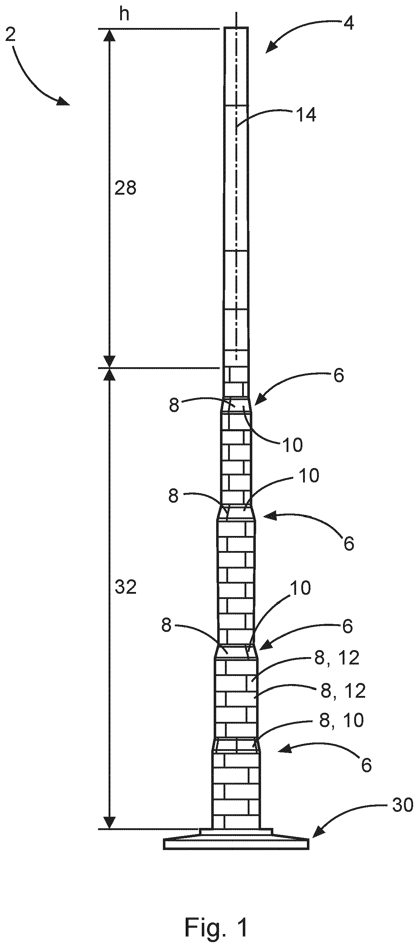

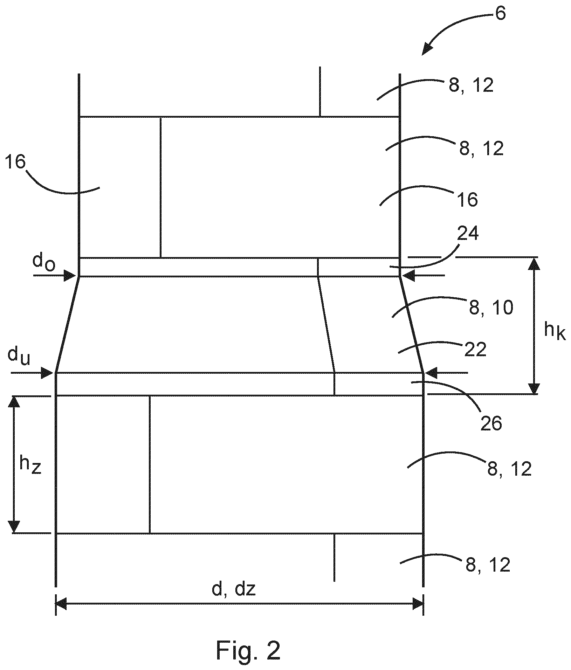

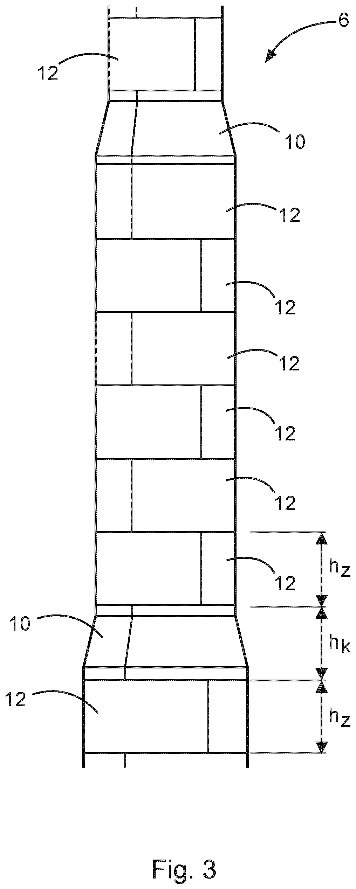

Figur 1 zeigt einen Turm 4 für eine Windenergieanlage 2, welche in Figur 1 lediglich angedeutet ist. Der Turm 4 weist ein Bodensegment 30 auf, von welchem ausgehend sich ein Betonsegment 32 erstreckt und ein oberhalb des Betonsegment 30 angeordnetes Stahlsegment 28. Oberhalb des Stahlsegments 28 kann bspw. eine in den Figuren nicht gezeigte Gondel einer Windenergieanlage 2 angeordnet sein. Das Betonsegment 32 weist mehrere Turmsegmente 6 auf. Jedes Turmsegment 6 besteht aus wenigstens drei übereinander angeordneten Wandelementen 8, wobei die Wandelemente 8 aus einem Betonwerkstoff ausgebildet sind. Turmsegmente 6 sind in die Figuren 2 und 3 im Detail gezeigt. Bei einem Turmsegment 6 ist ein mittleres Wandelement 10 der wenigstens drei Wandelemente 8, wie bspw. in Figur 2 gezeigt, als konisches Wandelement 10 ausgebildet. Das konische Wandelement 10 weist einen in Richtung einer Turmlängsachse 14 verlaufenden konischen Abschnitt 22 auf.

Alternativ kann das konische Wandelement auch vollständig konisch ausgebildet sein (in den Figuren nicht gezeigt). Unterhalb und oberhalb an das konische Wandelement 10 unmittelbar angrenzende Wandelemente 8 sind als zylindrische Wandelemente 12 ausgebildet. Die zylindrischen Wandelemente 12 weisen in Richtung der Turmlängsachse 14 einen zylindrischen Verlauf auf. Wie bspw. in den Figuren 1 bis 3 gezeigt, verjüngt sich ein konisches Wandelement 10 im Bereich des konischen Abschnitts 22 mit zunehmender Turmhöhe h. Dabei entspricht ein Außendurchmesser dz des unterhalb des konischen Wandelements 10 angeordneten zylindrischen Wandelements 12 einem unteren Konus-Außendurchmesser du des konischen Abschnitts 22. Ein Außendurchmesser d_{O} des oberhalb des konischen Wandelements angeordneten zylindrischen Wandelements 12 entspricht einem oberen Konus-Außendurchmesser d_{O} des konischen Abschnitts 22. Auf diese Weise findet eine Veränderung des Außendurchmessers d lediglich im Bereich der konischen Wandelemente 10, insbesondere im Bereich des konischen Abschnitts 22 der konischen Wandelemente 10, statt.

Unter Bezugnahme auf Figur 1 können zwischen benachbarten konischen Wandelementen 10 bspw. fünf zylindrische Wandelemente 12 oder sechs zylindrische Wandelemente 12 angeordnet sein. Zwischen dem Bodensegment 30 und einem mit zunehmender Höhe ersten konischen Wandelement 10 können bspw. fünf zylindrische Wandelemente 12 angeordnet sein. Oberhalb des am höchsten gelegenen konischen Wandelements 10 können bspw. zwei zylindrische Wandelemente 12 angeordnet sein.

Die Wandelemente 8 weisen einen Außendurchmesser d in einem Bereich von 9000 mm, insbesondere benachbart zu dem Bodensegment 30, und 4000 mm, insbesondere benachbart zu dem Stahlsegment 28, auf. Der Turm 4 weist in dem gezeigten Ausführungsbeispiel eine Gesamthöhe h von rund 145m auf, wobei das Stahlsegment 28 eine Höhe von etwa 61 m aufweist und das Betonsegment 32 eine Höhe von 84 m.

Wie insbesondere Figur 2 zu entnehmen ist, weist das konische Wandelement 10 unterhalb des konischen Abschnitts 22 wenigstens einen unteren zylindrischen Abschnitt 24 auf. Der untere zylindrische Abschnitt 24 weist einen Durchmesser auf, welcher dem unteren Konus-Außendurchmesser du entspricht. Darüber hinaus weist das konische Wandelement 10 oberhalb des konischen Abschnitts 22 wenigstens einen oberen zylindrischen Abschnitt 26 auf. Der obere zylindrische Abschnitt 26 weist einen Durchmesser auf, welcher dem oberen Konus-Außendurchmesser d_{O} entspricht. Wie in den Figuren gezeigt, beträgt eine Höhe des konischen Abschnitts 22 in etwa 75% einer Gesamthöhe h_{K} des konischen Wandelements. Alternativ kann sich der konische Abschnitts 22 über 100% einer Gesamthöhe h_{K} des konischen Wandelements 10 erstrecken, sodass das konische Wandelement 10 einen vollständig konischen Verlauf aufweist. Das konische Wandelement 10 kann gemäß einer Ausführungsform neben dem konischen Abschnitt 22 auch ausschließlich einen untere zylindrische Abschnitt 24 oder ausschließlich einen oberen zylindrischen Abschnitt 26 aufweisen. Die Höhe h_{K} des konischen Wandelements 10 insgesamt entspricht im Wesentlichen einer Höhe hz eines der angrenzenden zylindrischen Wandelemente 12. In dem in den Figuren gezeigten Ausführungsbeispiel weisen sämtliche Wandelemente 8, 10, 12 des Betonsegments 32 im Wesentlichen die gleiche Höhe hz, h_{K} auf.

Ein Außendurchmesser d des konischen Wandelements 10 verjüngt sich von dem oberen Konus-Außendurchmesser d_{O} bis zu dem unteren Konus-Außendurchmesser du um 800 mm bis 1200 mm. insbesondere um 1000 mm. Das konische Wandelement 10 weist eine Höhe h_{K} in Richtung der Turmlängsachse 14 von insbesondere 2800 mm auf. Die zylindrischen Wandelemente 12 weisen jeweils eine Höhe hz in Richtung der Turmlängsachse 14 von vorzugsweise ebenfalls 2800 mm auf. Insbesondere entspricht die Höhe h_{K} des konischen Wandelements 10 der Höhe hz des zylindrischen Wandelements 12. Die Wandelemente 12 weisen einen hochfesten Betonwerkstoff auf, insbesondere einen Betonwerkstoff der Druckfestigkeitsklasse C90/105 oder C100/115.

Unter Bezugnahme auf Figur 3 weist ein beispielhaft gezeigtes Turmsegment 6 zwei konische Wandelemente 10 auf, wobei zwischen den in Figur 3 gezeigten konischen Wandelementen 10, die in Richtung der Turmlängsachse 14 benachbart zueinander angeordnet sind, sechs zylindrische Wandelemente 12 angeordnet sind.

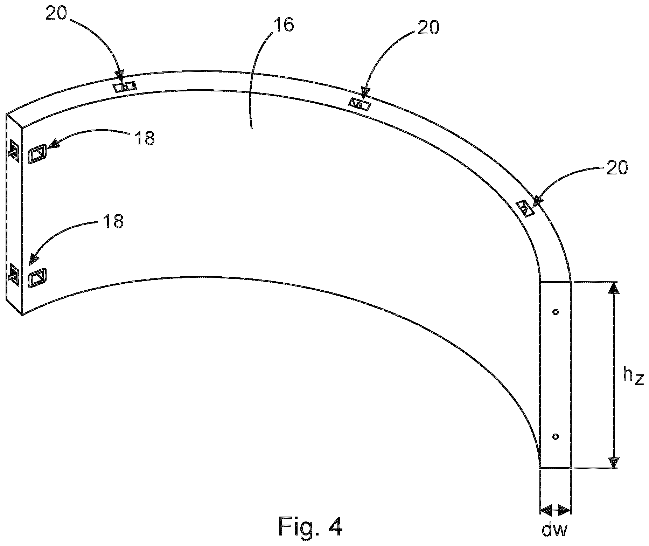

Die Wandelemente 8 sind aus zwei, drei oder mehr Halbschalen 16 ausgebildet. Eine solche Halbschale 16 ist in einer perspektivischen Ansicht in Figur 4 gezeigt. Die Halbschale 16 weist Verbindungsmittel 18 zur Verwendung der Halbschalen 16 miteinander auf. Die Halbschalen 16 weisen ferner jeweils wenigstens eine Aufnahme zur Aufnahme eines Hebemittels auf, sodass die Halbschalen 16 oder ein Verbund aus mehreren Halbschalen 16 bspw. mittels eines Kranes angehoben werden kann.

### Bezugszeichen

- 2: Windenergieanlage
- 4: Turm
- 6: Turmsegment
- 8: Wandelement
- 10: konisches Wandelement
- 12: zylindrisches Wandelement
- 14: Turmlängsachse
- 16: Halbschalen
- 18: Halbschalen-Verbindungsmittel
- 20: Hebemittel-Aufnahme
- 22: konischer Abschnitt
- 24: oberer zylindrischer Abschnitt
- 26: unterer zylindrischer Abschnitt
- 28: Stahlsegment
- 30: Bodensegment
- 32: Betonsegment
- d: Außendurchmesser der Wandelemente
- d_{O}: oberer Konus-Außendurchmesser
- du: unterer Konus-Außendurchmesser
- dw: Wandstärke der Wandelemente
- dz: Außendurchmesser eines zylindrischen Wandelements
- h: Turmhöhe
- h_{K}: Höhe des konischen Wandelements
- hz: Höhe des zylindrischen Wandelementes

## Patentansprüche

1. Turmsegment (6) für einen Turm (4) einer Windenergieanlage (2), mit wenigstens drei übereinander angeordneten Wandelementen (8), wobei die Wandelemente (8) aus einem Betonwerkstoff ausgebildet sind,
**dadurch gekennzeichnet, dass** ein mittleres Wandelement (10) der drei Wandelemente (8) als konisches Wandelement (10) ausgebildet ist, welches einen in Richtung einer Turmlängsachse (14) verlaufenden konischen Abschnitt (22) aufweist oder vollständig konisch ausgebildet ist,
und wobei die unterhalb und oberhalb an das konische Wandelement (10) unmittelbar angrenzenden Wandelemente (12) als zylindrische Wandelemente (12) ausgebildet sind, welche in Richtung der Turmlängsachse (14) einen zylindrischen Verlauf aufweisen.

2. Turmsegment (6) nach Anspruch 1,
wobei sich das konische Wandelement (10) im Bereich des konischen Abschnitts (22) mit zunehmender Turmhöhe (h) verjüngt.

3. Turmsegment (6) nach einem der vorstehenden Ansprüche,
wobei ein Außendurchmesser (dz) des unterhalb des konischen Wandelements (10) angeordneten zylindrischen Wandelements (12) einem unteren Konus-Außendurchmesser (du) des konischen Abschnitts (22) entspricht und/oder wobei ein Außendurchmesser (do) des oberhalb des konischen Wandelements (10) angeordneten zylindrischen Wandelements (12) einem oberen Konus-Außendurchmesser (do) des konischen Abschnitts (22) entspricht.

4. Turmsegment (6) nach einem der vorstehenden Ansprüche,
wobei das konische Wandelement (10) unterhalb des konischen Abschnitts (22) wenigstens einen unteren zylindrischen Abschnitt (24) mit einem Durchmesser aufweist, welcher dem unteren Konus-Außendurchmesser (du) entspricht und/oder wobei das konische Wandelement (10) oberhalb des konischen Abschnitts (22) wenigstens einen oberen zylindrischen Abschnitt (26) mit einem Durchmesser aufweist, welcher dem oberen Konus-Außendurchmesser (do) entspricht.

5. Turmsegment (6) nach einem der vorstehenden Ansprüche,
wobei eine Höhe (h_{K}) des konischen Wandelements (10) im Wesentlichen einer Höhe (hz) eines der angrenzenden zylindrischen Wandelemente (12) entspricht, insbesondere wobei sämtliche Wandelemente (8, 10, 12) im Wesentlichen die gleiche Höhe (hz, h_{K}) aufweisen.

6. Turmsegment (6) nach einem der vorstehenden Ansprüche,
wobei das Turmsegment (6) zwei konische Wandelemente (10) aufweist und wobei zwischen zwei in Richtung der Turmlängsachse (14) benachbarten konischen Wandelementen (10) 2 oder mehr Wandelemente (12) angeordnet sind.

7. Turmsegment (6) nach einem der vorstehenden Ansprüche,
wobei sich der ein Außendurchmesser (d) des konischen Wandelements (10) von dem oberen Konus-Außendurchmesser (do) bis zu dem unteren Konus-Außendurchmesser (du) um 800 mm bis 1200 mm verjüngt, insbesondere um 1000 mm.

8. Turmsegment (6) nach einem der vorstehenden Ansprüche,
wobei das konische Wandelement (10) eine Höhe (hₖ) in Richtung der Turmlängsachse (14) von 2000 mm bis 4000 mm aufweist, insbesondere von 2600 mm bis 3000 mm.

9. Turmsegment (6) nach einem der vorstehenden Ansprüche,
wobei wenigstens eines, insbesondere sämtliche der zylindrischen Wandelemente (12) eine Höhe (hz) in Richtung derTurmlängsachse (14) von 2000 mm bis 4000 mm aufweisen, insbesondere 2600 mm bis 3000 mm.

10. Turmsegment (6) nach einem der vorstehenden Ansprüche,
wobei der Betonwerkstoff ein hochfester Betonwerkstoff ist, insbesondere ein Betonwerkstoff der Druckfestigkeitsklasse C90/105 oder C100/115.

11. Turmsegment (6) nach einem der vorstehenden Ansprüche,
wobei wenigstens eines, mehrere oder alle der Wandelemente (8) aus zwei, drei oder mehr Halbschalen (16) ausgebildet sind, insbesondere wobei die Halbschalen (16) Verbindungsmittel (18) zur Verbindung der Halbschalen (16) miteinander aufweisen und/oder wobei die Halbschalen (16) jeweils wenigstens eine Aufnahme (20) zur Aufnahme eines Hebemittels aufweisen.

12. Turmsegment (6) nach einem der vorstehenden Ansprüche,
wobei die Wandelemente (8) einen Außendurchmesser (d) von 4000 mm bis 13000 mm aufweisen, und/oder
wobei die Wandelemente (8) eine Wandstärke von 300 mm bis 500 mm aufweisen, insbesondere 350 mm.

13. Turm (4) für eine Windenergieanlage (2) mit wenigstens einem, insbesondere mehreren Turmsegmenten (6) nach einem der vorstehenden Ansprüche.

14. Windenergieanlage (100) mit einem Turm (4), wobei der Turm (4) nach Anspruch 13 ausgebildet ist.

15. Verwendung eines Turmsegments (6) nach einem der Ansprüche 1 bis 12 für einen Turm (4) einer Windenergieanlage (2).
